# EUROPEAN PATENT SPECIFICATION

(11) **EP 2 204 728 B1**
(45) Date of publication and mention of the grant of the patent: **07.11.2018**
(21) Application number: 09180974.9
(22) Date of filing: 30.12.2009
(51) Int. Cl.: G06F 3/0482, G06F 3/0485

(54) **INFORMATION PRODUCT AND METHOD FOR INTERACTING WITH USER**
INFORMATIONSPRODUKT UND VERFAHREN ZUR INTERAKTION MIT BENUTZERN
PRODUIT D'INFORMATIONS ET PROCÉDÉ D'INTERACTION AVEC L'UTILISATEUR

(30) Priority: 31.12.2008 TW 97151695
(43) Date of publication of application: 07.07.2010
(73) Proprietor: HTC Corporation, Taoyuan City 330 (TW)
(72) Inventor: Lu, Tseng-Yi, 330, Taoyuan City, Taoyuan County (TW)
(74) Representative: Lang, Christian

(56) References cited:
- US-A1- 2006 242 603
- US-A1- 2007 038 961
- US-B1- 6 430 574

## Description

### Field of the Invention

A method for displaying tree structure data and a hand-held electronic device and a computer program product thereof are disclosed, and more particularly, to a hand-held electronic device with a screen, a method for displaying tree structure data on a hand-held electronic device, and a computer program product of the method.

### Background of the Invention

Hand-held electronic devices, and in particular hand-held communication devices, are widely used in daily life and greatly influence the lives of people. To meet different functional demands hand-held communication devices have become smaller and have more functions. The hand-held communication devices, for example personal digital assistant (PDA) phones and smart phones, not only have the traditional communication device functions, but also provide a built-in operating system to perform advanced functions, such as document writing, e-mail transmitting and receiving, internet browsing, and instant messaging software. In other words, the hand-held communication device can not only be used as a telephone, but can also be used as small personal computers with multiple functions. In addition, because of the development of wireless network technology, it is possible to use the hand-held communication devices to perform advanced functions anytime and anywhere. Therefore, hand-held electronic devices have become necessary for modern people who place a great emphasis on time management and efficiency.

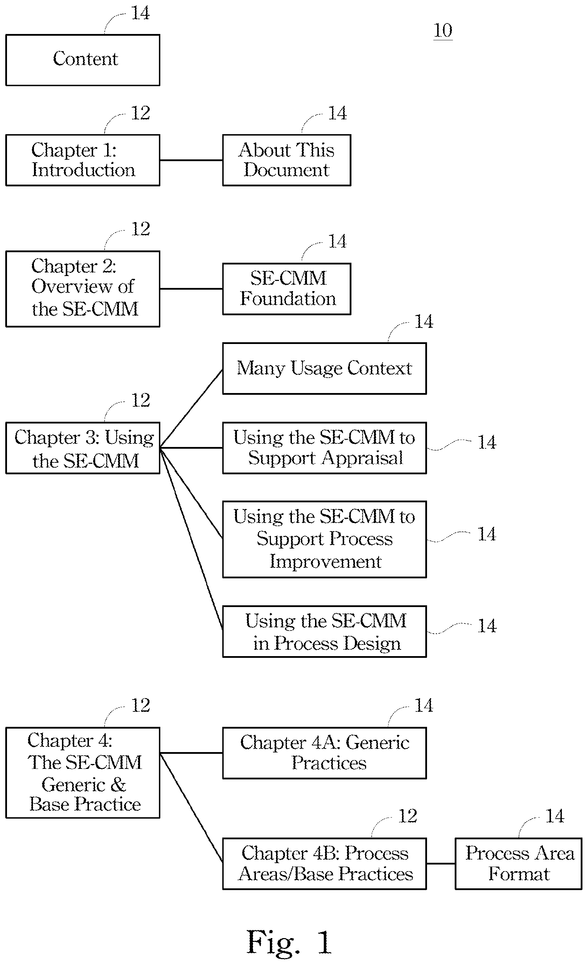

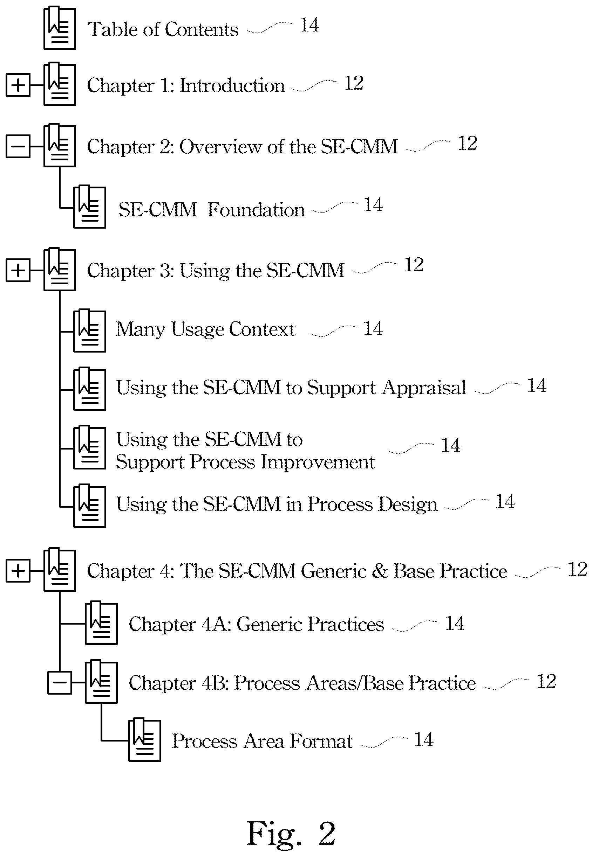

Refer to Fig. 1 and Fig. 2 simultaneously. Fig. 1 is a structure diagram showing a function menu 10 with a tree structure. Fig. 2 is a structure diagram showing a function menu interface implemented on a conventional hand-held device to display the function menu 10. The function menu 10 includes node items 12 and sub-items 14. Each node item 12 includes at least one of the sub-items 14. In general, data stored in an electronic device, such as node items 12 and sub-items 14, is usually arranged in a tree structure form because the tree structure form makes data easily and quickly comprehended by users. in hand-held electronic devices, each of the node items and sub-items corresponds to an option. For example, a node item 12 corresponds to a function for displaying the content of "Chapter 2: overview of the SE-CMM".

In a personal computer, the node items 12 and sub-items 14 are usually displayed in a hierarchical way, and the way used by the hand-held electronic device to display the node items 12 and sub-items 14 is the same as that used by a personal computer. Because of the limited size of the hand-held electronic device, the size of the icon of each of the options must be smaller when the options are displayed on the limited screen area of the hand-held electronic device in the hierarchical way. However, if the icon is made too small, the user may not see the name of the option clearly, or the users may easily select the incorrect causing frustration and wasting time.

US 6,430,574 B1 relates to a method and an apparatus for scrolling a displayed hierarchical data structure including data headers and subordinate data. A subordinate data is always presented in combination with the corresponding data header even if the additional subordinate data associated to said data header are not displayed. In order to indicate that not all subordinate data corresponding to a data header are presented, a descriptor is associated to each data header indicating which part of the subordinate data is displayed.

US 2006/0242603 A1 relates to a system and a method of automatically dynamically scrolling content in vertical and, if necessary, in horizontal direction.

US 2007/0038961 A1 describes a method for providing a directory tree by providing identical marks to each item of the same level.

Starting from the prior art it is the object of the present invention to provide a method, a computer program product and a hand-held electronic device which allows to present a tree structure data in a way that even if a node item is not presented in the displayed portion of an item line, the node item to which a sub-item is associated can be displayed without the need of scrolling backwards so that the hierarchical structure can be maintained and the user can easily determine the node item to which a sub-item is associated.

### Summary of the Invention

The above-mentioned object is solved by the method according to claim 1, the computer program product according to claim 5 and the hand-held electronic device according to claim 9. Advantageous improvements of the invention are described by the dependent claims.

A hand-held electronic device is provided. The menu interface of the hand-held electronic device can display icons of options with the normal size to help users easily select the correct option and enable users to easily read the names of the options on the screen..

An exemplary method for displaying tree structure data and a computer program product thereof is provided. A menu interface set up via the method can display normal sized icons for the different options to help users easily select the correct option and enable users to easily read the names of the options on the screen.

According to another exemplary hand-held electronic device, the hand-held electronic includes a menu providing module, a tag providing module, an input module, and a display module. The menu providing module is used to provide tree structure data, wherein the tree structure data includes a node item and a sub-item belong to the node item. The tag providing module is used to provide a tag item and move the tag item. The input module is used to be inputted a control signal by a user to control the tag providing module, wherein the tag providing module moves the tag item in accordance with the control signal. The display module is used to display at least one portion of an item line comprising the node item and the sub-item on the screen. The screen shows the name of the node item when the user moves the tag item to an area next to the sub item.

According to another exemplary method for the displaying tree structure data, at least one portion of an item line including the sub-item and a tag item is firstly displayed on a screen. Then, the tag item is moved. Thereafter, the name of the node item is displayed, when the tag item is next to the sub item.

According to an exemplary computer program product, the computer
program product can be loaded by a computer, to enable the computer to display the tree structure data.

### Brief Description of the Drawings

The foregoing aspects and many of the attendant advantages of this disclosure will become more readily appreciated as the same becomes better understood by reference to the following detailed description, when taken in conjunction with the accompanying drawings, wherein:
Fig.1 is a structure diagram showing a function menu with a tree structure;
Fig.2 is a structure diagram showing a function menu interface used implemented on a conventional hand-held device to display the function menu;
Fig. 3 is a flow chart showing an exemplary method to display the tree structure data;
Fig. 4 to Fig. 6 are diagrams showing the screen of an exemplary hand-held electronic device;
Fig.7 is a flow chart showing an exemplary method for displaying the tree structure data;
Fig. 8 to Fig. 10 are diagrams showing the screen of an exemplary hand-held electronic device;
Fig.11 is a functional block diagram showing an exemplary hand-held electronic device; and
Fig.12 is a functional block diagram showing an exemplary hand-held electronic device.

### Detailed Description

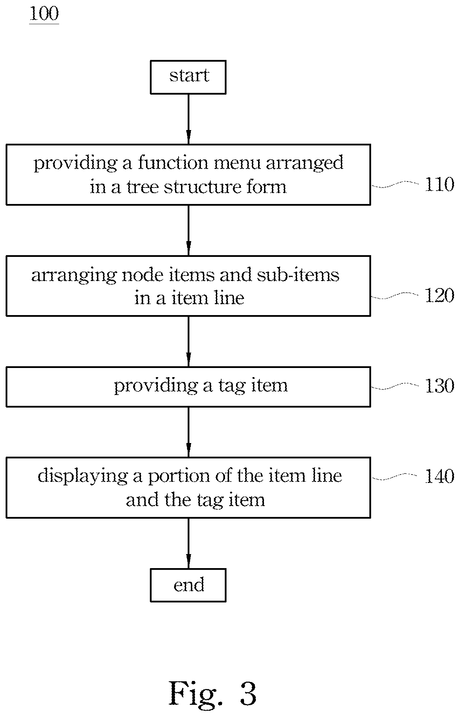

In order to make the illustration of the present disclosure more explicit and complete, the following description is stated with reference to Fig. 3 through Fig.
12.

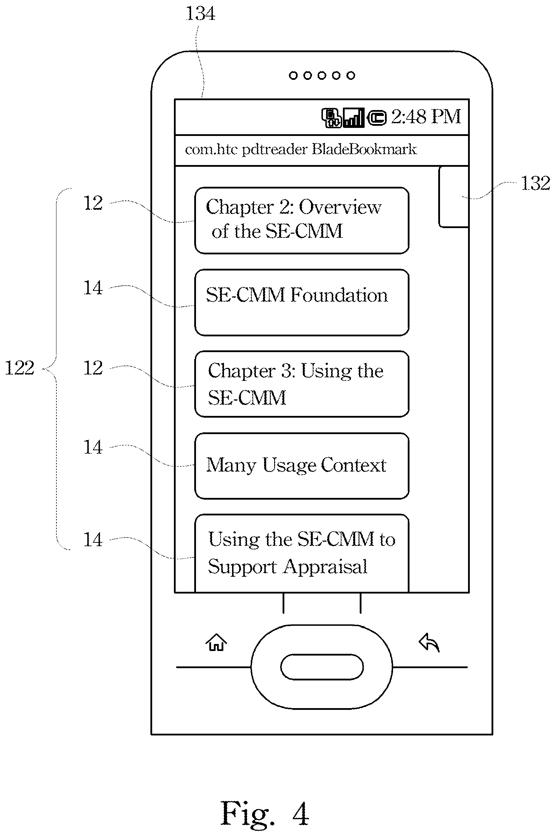

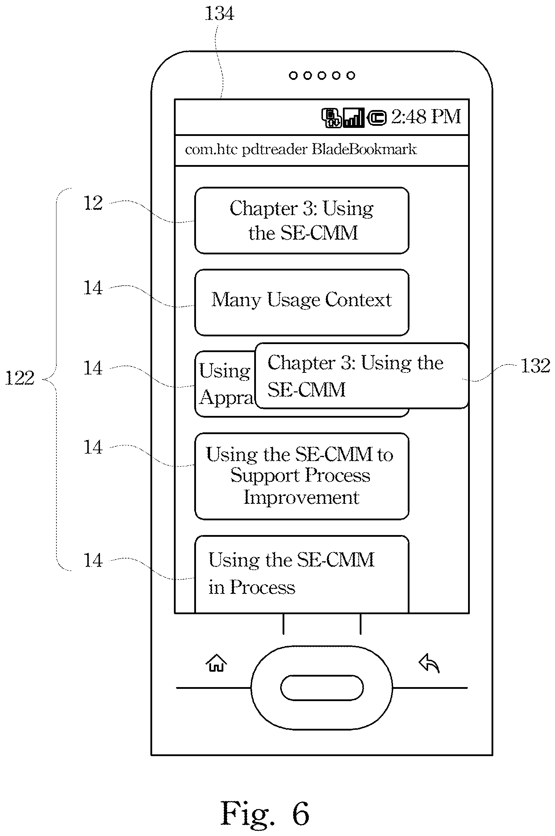

Refer to Fig. 3 and to Fig 6 simultaneously. Fig. 3 is a flow chart showing an exemplary method 100 for displaying tree structure data. Fig. 4 to Fig. 6 are diagrams showing the screen of an exemplary hand-held electronic device.

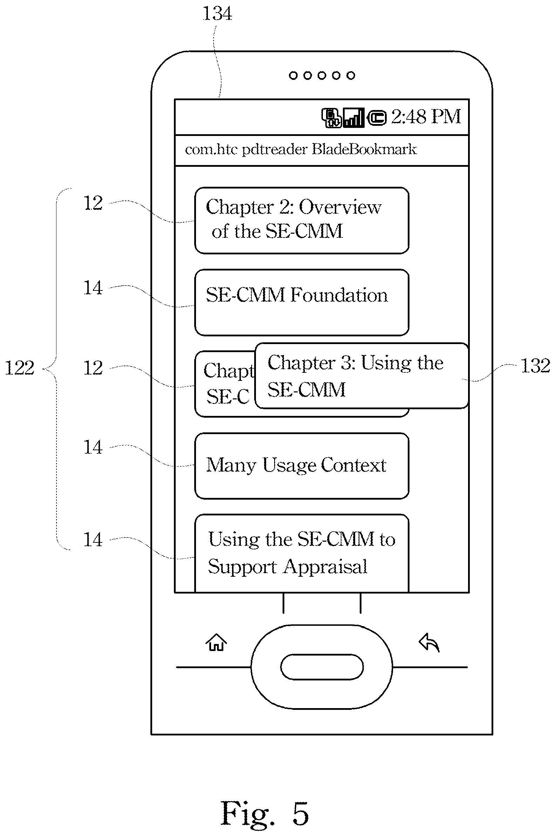

First consider the method 100 shown in the flow chart in Fig. 3. In Step 110 data is provided to the system to generate the function menu 10 with a tree structure form. In Step 120 the node items 12 and the sub-items 14 (see Fig. 4 to Fig. 6) are arranged in the line item 122. In step130, a tag item 132 is provided. In step 140, at the least a portion of the item line 122 and the tag item 132 are displayed on the screen 134 (Fig. 4 to Fig. 6) of the hand-held electronic device, wherein the tag item 132 is movable when selected. As shown in Fig. 5, the tag item 132 is selected and moved down and the size thereof is enlarged to overlap the portion of the item line 122. At this time, if the distance between the tag item 132 and one of the node items 12 is smaller than a predetermined distance, or the tag item 132 overlaps one of the node items 12, the name of the one of the node items 12 is displayed on the screen, for example, displayed on or around the tag item 132. In the Fig.5, the name of the node item 12 is displayed on the tag item 132.

In the Fig. 5, the name of the node item 12 overlapped by the tag item is "Chapter 3: Using the SE-CMM", so the tag item 132 displays the name "Chapter 3: Using the SE-CMM" of the node item 12. In addition, in the Fig. 6, when the item overlapped by the tag item 132 is the sub-item 14, the tag item 132 displays the name of the the node item 12 including the sub-item 14 overlapped by the tag item 132. As shown in Fig. 6, the name of the sub-item 14 overlapped by the tag item 132 is "Using the SE-CMM to Support Appraisal", and it belongs to the node item 12 named "Chapter 3: using the SE-CMM", therefore the tag item 132 displays the name "Chapter 3: using the SE-CMM" of the node item 12.

In addition, when the tag item is moved up, the screen 134 scrolls up to display the other items of the item line 122 on the screen 134. In a similar way, when the tag item is moved down, the screen 134 scrolls down to display the other items of the item line 122 on the screen 134. Note that the scrolling of the screen 134 is configured to display the other items of the item line 122 on the screen 134, so, except for the items of the item line 122, the items displayed on the screen 134 may stay in their original place when the screen 134 scrolls up or down. For example, the time displayed on the upper right corner of the screen 134 stays at its original places, when the tag item 132 is moved up or down.

According to the aforementioned, the items of the function menu 10 are arranged in the item line 122, and the tag item 132 displays the name of the node item which the sub-item belongs to, and when the tag item 132 is moved, the screen 134 scrolls to display the other items of the item line 122. Because the screen 134 can be scrolled to display the option of the function menu 10, the size of the option icons do not have to be decreased to make all the options displayed on the screen. Furthermore, the name of the node item which the sub-item belongs to can be displayed on or around the tag item, so the user can quickly find the item he wants via the name displayed on the tag item.

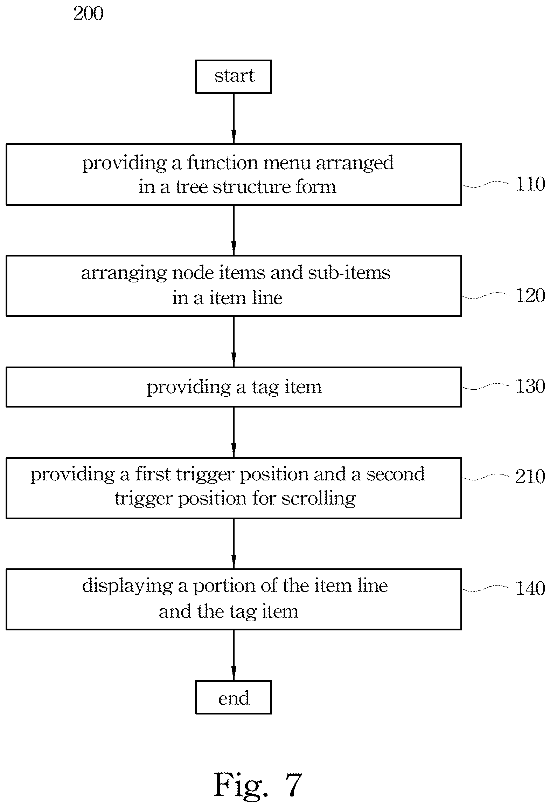

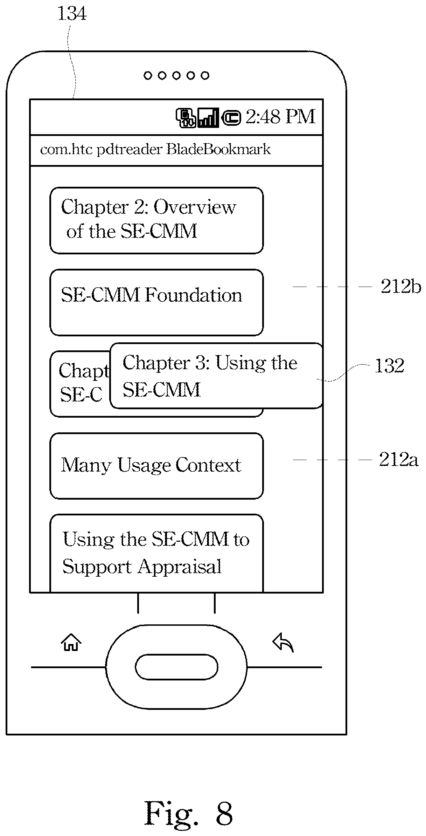

Refer to Fig. 7 to Fig. 10. Fig. 7 is a flow chart showing an exemplary method 200 for displaying tree structure data. Fig. 8 to Fig. 10 are diagrams showing a screen of an exemplary hand-held electronic device. The method 200 is similar to the method 100, but the difference is in that the method 200 further includes a trigger scrolling positions providing step 210. In the trigger scrolling positions providing step 210, trigger scrolling positions 212a and 212b are provided on the screen 134. When the tag item 132 is moved to the position 212a or 212b, the screen 134 starts to scroll.

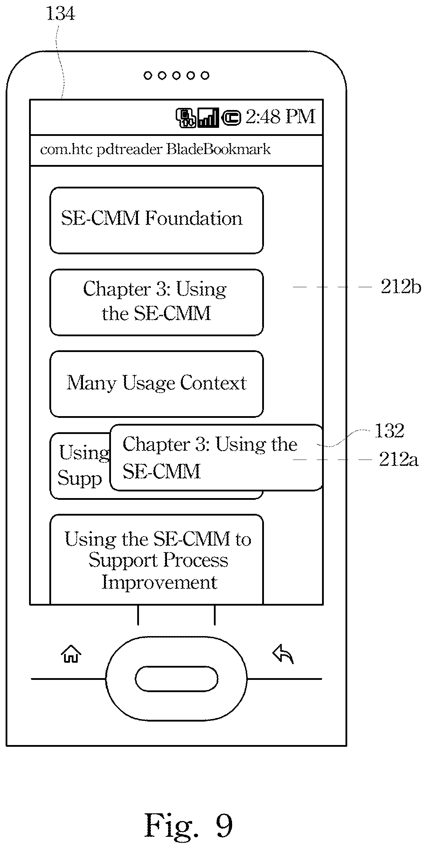

As shown in Fig. 8, the tag item 132 initially overlaps the node item 12 named "Using the SE-CMM". As shown in Fig. 9, when the tag item 132 is moved down to the position 212a, the screen 134 is then scrolled down until the tag item 132 leaves the position 212a, and thus the upper portion of the item line 122 is displayed on the screen 134.

According to the aforementioned, an exemplary method for triggering scrolling of the screen to match people's habit is provided.

In addition, the method 100 or 200 can be applied in a computer program product. When a computer (for example a processor of a mobile phone) loads the computer program product, it can perform the method 100 and 200 for displaying tree structure data.

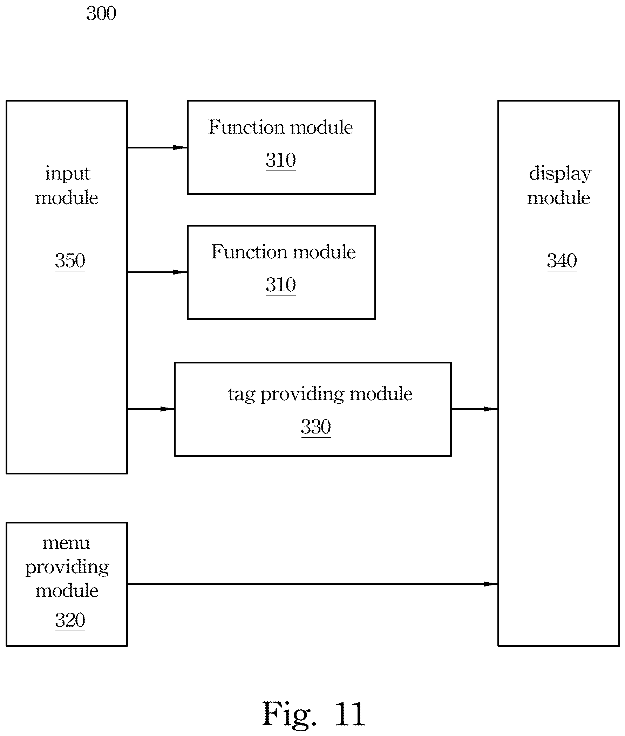

Refer to Fig. 4 to Fig. 6 and Fig. 11. Fig.11 is a functional block diagram showing an exemplary hand-held electronic device 300. The hand-held electronic device 300 includes function modules 310, a menu providing module 320, a tag providing module 330, a display module 340, and an input module 350. The function modules 310 are used to provide various functions to users. For example, the function modules 310 may include a sound input module and a wireless communication module, wherein the sound input module is used to receive the sound messages of the users to output a sound information to the wireless communication module, and the wireless communication module is used to transmit a sound signal to a base station according to the sound information and receive another sound signal from the base station to enable the user to talk to a receiver. In other examples, the function modules can be camera modules or blue tooth communication modules.

The menu providing module 320 is used to provide the function menu 10 having the tree structure form and arrange node options (node items 12) and sub-options (sub-item 14) in a item line 122. The tag providing module 330 is used to provide and control the tag item 132. The display module 340 is used to display a portion of the item line 122 and the tag item 132 on the screen 134. The input module 350 is used to be input a control signal by the user to control the function module 310 and the tag providing module 330. As shown in Fig. 4 and Fig. 6, when the user selects the tag item 132 via the input module 350, the tag providing module 330 makes the tag item 132 movable for the user and further enlarges the size of the tag item 132. When the tag item 132 is next to or overlaps on one of the node items 12 of the item line, the name of the one of the node items 12 is displayed on or around the tag item 132. When the tag item 132 is next to or overlaps on one of the sub-items 14 of the item line, the name of the node item which the one of the sub-items 14 belongs to is displayed on or around the tag item 132.

In addition, when the tag item 132 is moved up, the screen 134 scrolls up to display the other items of the item line 122 on the screen 134. In a similar way, when the tag item 132 is moved down, the screen 134 scrolls down to display the other items of the item line 134 on the screen.

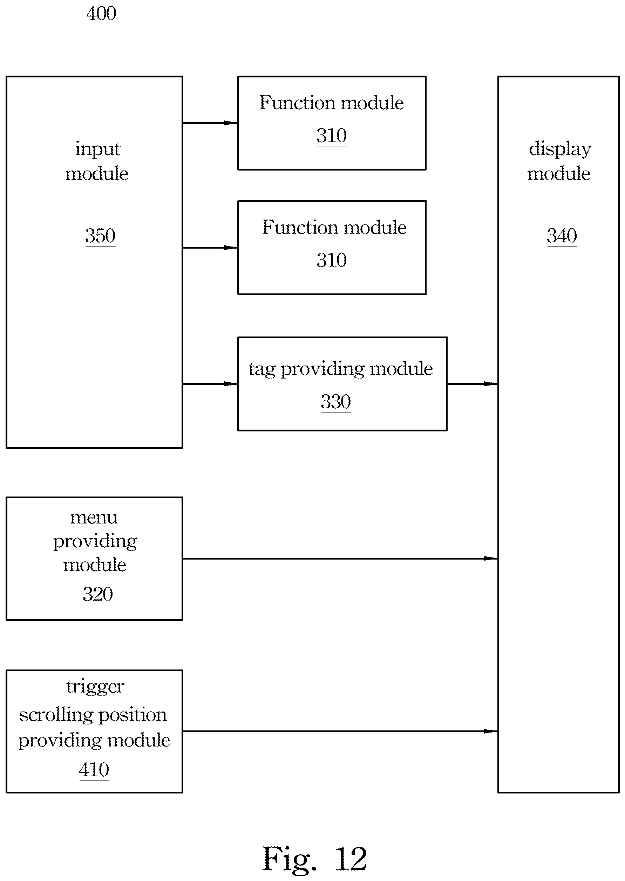

Refer to Fig. 8 to Fig. 10 and Fig. 12. Fig. 12 is a functional block diagram showing an exemplary hand-held electronic device 400. The hand-held electronic device 400 is similar to the hand-held electronic device 300, but the difference is in that the hand-held electronic device 400 further includes a trigger scrolling position providing module 410. The trigger scrolling position providing module 410 is used to provide the trigger scrolling positions 212a and 212b on the screen. When the user moves the tag item 132 to the trigger scrolling positions, the trigger scrolling position providing module 410 controls the menu providing module 320 to scroll the screen 134.

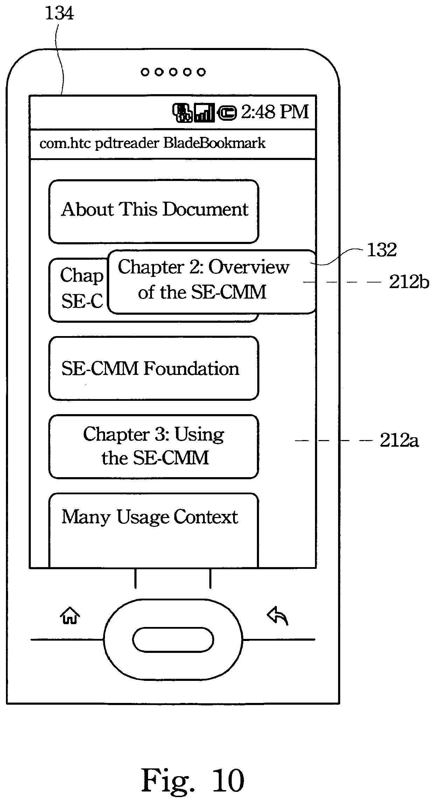

For example, as shown in Fig. 8, the tag item 132 initially overlaps the node item 12 named "Using the SE-CMM". When the tag item 132 is moved down to the position 212a, as shown in Fig. 9, the screen 134 scrolls down until the tag item 132 leaves the position 212a, and thus the items of the lower half portion of the item line 122 is displayed. In a similar way, when the tag item 132 is moved up to the position 212b, as shown in Fig. 10, the screen 134 scrolls up until the tag item 132 leaves the position 212b, and thus the items of the upper half portion of the item line 122 is displayed.

In addition, it is noted that the input module 350 can be a touch detection module, such as a touch panel, a touch pad, and a trackball. When the user controls the touch detection module to touch the options displayed on the screen 134, the touch detection module controls (moves or selects) the items according to the motion (drawing or clicking) of the user.

As is understood by a person skilled in the art, the foregoing examples of the present disclosure are not a limitation.

## Claims

1. A method for displaying tree structure data, wherein the tree structure data comprises a node item (12) and a sub-item (14) belonging to the node item (12), the method comprises:
displaying at least one portion of an item line (122), including the sub-item (14), and a tag item (132) on a screen (134);
moving the tag item (132) in accordance with a user control signal;
**characterized by**
displaying the name of the node item (12) on the tag item (132), when a distance between the tag item (132) and the sub item (14) is smaller than a predetermined distance.

2. The method of claim 1, further comprising displaying the name of the node item (12) when the tag item (132) is next to the node item (12), wherein item line (122) further comprises the node item (12).

3. The method of claim 1, further comprising enlarging the size of the tag item (132) when the tag item (132) is selected and moved initially.

4. The method of claim 1, further comprising scrolling the screen (134) when the tag item (132) is moved to a trigger position (212a, 212b), to display another portion of the item line (122) on the screen (134).

5. A computer program product, configured to be loaded by a computer to enable the computer to perform a method (100, 200) for displaying tree structure data, wherein the tree structure data comprises a node item (12) and a sub-item (14) belonging to the node item (12), the method (100, 200) comprises:
displaying at least one portion of an item line (122), including the sub-item (14), and a tag item (132) on a screen (134);
moving the tag item (132) in accordance with a user control signal;
**characterized by**
displaying the name of the node item (12) on the tag item (132), when a distance between the tag item (132) and the sub item (14) is smaller than a predetermined distance.

6. The computer program product of claim 5, wherein the method further comprising displaying the name of the node item (12) when the tag item (132) is next to the node item (12), wherein item line (122) further comprises the node item (12).

7. The computer program product of claim 5, wherein the method further comprising enlarging the size of the tag item (132) when the tag item (132) is selected and moved initially.

8. The computer program product of claim 5, wherein the method further comprising scrolling the screen (134) when the tag item (132) is moved to a trigger position (212a, 2112b), to display another portion of the item line (122) on the screen (134).

9. A hand-held electronic device (300, 400), comprising:
a menu providing module (320), used to provide tree structure data, wherein the tree structure data comprises a node item (12) and a sub-item (14) belonging to the node item (12);
a tag providing module (330), used to provide a tag item (132) and move the tag item (132);
an input module (350), used to input a control signal by a user to control the tag providing module (330), wherein the tag providing module (330) moves the tag item (132) in accordance with the user control signal; and
a display module (340), used to display at least one portion of an item line (122) comprising the node item (12) and the sub-item (14) on a screen (134);
**characterized in that**
the tag item (132) displays the name of the node item (12) when the user moves the tag item (132) to an area, and a distance between the tag item (132) and the area is smaller than a predetermined distance.

10. The hand-held electronic device of claim 9, wherein the item line (122) further comprises the node item (12), and the screen (132) displays the name of the node item (12) when the tag item (132) is next to the node item (12).

11. The hand-held electronic device of claim 9, wherein the size of the tag item (132) is enlarged when the tag item is selected and moved initially.

12. The hand-held electronic device of claim 9, wherein the screen (134) scrolls to display another portion of the item line (122) on the screen (134) when the tag item (132) is moved to a trigger position (212a, 212b).

## Patentansprüche

1. Verfahren zum Anzeigen von Baumstrukturdaten, wobei die Baumstrukturdaten ein Knotenelement (12) und ein Unterelement (14), das zu dem Knotenelement (12) gehört, umfassen, wobei das Verfahren umfasst:
Anzeigen zumindest eines Bereichs einer Elementlinie (122), die das Unterelement (14) umfasst, und eines Markierungselements (132) auf einem Bildschirm (134),
Bewegen des Markierungselements (132) nach einem Benutzersteuerungssignal,
**gekennzeichnet durch**
das Anzeigen des Namens des Knotenelements (12) auf dem Markierungselement (132), wenn eine Distanz zwischen dem Markierungselement (132) und dem Unterelement (14) kleiner als eine vorbestimmte Distanz ist.

2. Verfahren nach Anspruch 1, das ferner das Anzeigen des Namens des Knotenelements (12) umfasst, wenn das Markierungselement (132) neben dem Knotenelement (12) ist, wobei die Elementlinie (122) ferner das Knotenelement (12) umfasst.

3. Verfahren nach Anspruch 1, das ferner das Vergrößern der Größe des Markierungselements (132) umfasst, wenn das Markierungselement (132) ausgewählt und anfänglich bewegt wird.

4. Verfahren nach Anspruch 1, das ferner das Scrollen des Bildschirms (134) umfasst, wenn das Markierungselement (132) zu einer Auslöseposition (212a, 212b) bewegt wird, um einen anderen Bereich der Elementlinie (122) auf dem Bildschirm (134) anzuzeigen.

5. Computerprogrammprodukt, das dafür ausgelegt ist, von einem Computer geladen zu werden, um es dem Computer zu ermöglichen, ein Verfahren (100, 200) zum Anzeigen von Baumstrukturdaten durchzuführen, wobei die Baumstrukturdaten ein Knotenelement (12) und ein Unterelement (14), das zu dem Knotenelement (12) gehört, umfassen, wobei das Verfahren (100, 200) umfasst:
Anzeigen zumindest eines Bereichs einer Elementlinie (122), die das Unterelement (14) umfasst, und eines Markierungselements (132) auf einem Bildschirm (134);
Bewegen des Markierungselements (132) nach einem Benutzersteuerungssignal;
**gekennzeichnet durch**
das Anzeigen des Namens des Knotenelements (12) auf dem Markierungselement (132), wenn eine Distanz zwischen dem Markierungselement (132) und dem Unterelement (14) kleiner als eine vorbestimmte Distanz ist.

6. Computerprogrammprodukt nach Anspruch 5, bei welchem das Verfahren ferner das Anzeigen des Namens des Knotenelements (12) umfasst, wenn das Markierungselement (132) neben dem Knotenelement (12) ist, wobei die Elementlinie (122) ferner das Knotenelement (12) umfasst.

7. Computerprogrammprodukt nach Anspruch 5, bei welchem das Verfahren ferner das Vergrößern der Größe des Markierungselements (132) umfasst, wenn das Markierungselement (132) ausgewählt und anfänglich bewegt wird.

8. Computerprogrammprodukt nach Anspruch 5, bei welchem das Verfahren ferner das Scrollen des Bildschirms (134) umfasst, wenn das Markierungselement (132) zu einer Auslöseposition (212a, 212b) bewegt wird, um einen anderen Bereich der Elementlinie (122) auf dem Bildschirm (134) anzuzeigen.

9. Elektronisches Handgerät (300, 400), umfassend:
ein Menüerzeugungsmodul (320), das zum Bereitstellen von Baumstrukturdaten verwendet wird, wobei die Baumstrukturdaten ein Knotenelement (12) und einen Unterelement (14), das zu dem Knotenelement (12) gehört, umfassen,
ein Markierungserzeugungsmodul (330), das zum Bereitstellen eines Markierungselements (132) und zum Bewegen des Markierungselements (132) verwendet wird,
ein Eingabemodul (350), das zum Eingeben eines Steuerungssignals durch einen Benutzer verwendet wird, um das Markierungserzeugungsmodul (330) zu steuern, wobei das Markierungserzeugungsmodul (330) das Markierungselement (132) in Übereinstimmung mit dem Benutzersteuerungssignal bewegt, und
ein Anzeigemodul (340), das zum Anzeigen zumindest eines Bereichs einer Elementlinie (122), die das Knotenelement (12) umfasst, und des Unterelements (14) auf einem Bildschirm (134) verwendet wird,
**dadurch gekennzeichnet, dass**
das Markierungselement (132) den Namen des Knotenelements (12) anzeigt, wenn der Benutzer das Markierungselement (132) zu einem Bereich bewegt, und eine Distanz zwischen dem Markierungselement (132) und dem Bereich kleiner ist als eine vorbestimmte Distanz.

10. Elektronisches Handgerät nach Anspruch 9, bei welchem die Elementlinie (122) ferner das Knotenelement (12) umfasst, und der Bildschirm (132) den Namen des Knotenelements (12) anzeigt, wenn das Markierungselement (132) neben dem Knotenelement (12) ist.

11. Elektronisches Handgerät nach Anspruch 9, bei welchem die Größe des Markierungselements (132) vergrößert wird, wenn das Markierungselement (132) ausgewählt und anfänglich bewegt wird.

12. Elektronisches Handgerät nach Anspruch 9, bei welchem der Bildschirm (134) scrollt, um einen anderen Bereich der Elementlinie (122) auf dem Bildschirm (134) anzuzeigen, wenn das Markierungselement (132) zu einer Auslöseposition (212a, 212b) bewegt wird.

## Revendications

1. Procédé d'affichage de données d'arborescence, dans lequel les données d'arborescence comprennent un élément de noeud (12) et un sous-élément (14) appartenant à l'élément de noeud (12), le procédé comprend:
l'affichage d'au moins une portion d'une ligne d'élément (122), incluant le sous-élément (14), et un élément d'étiquette (132) sur un écran (134);
le déplacement de l'élément d'étiquette (132) selon un signal de commande d'utilisateur;
**caractérisé par**
l'affichage du nom de l'élément de noeud (12) sur l'élément d'étiquette (132), lorsqu'une distance entre l'élément d'étiquette (132) et le sous-élément (14) est inférieure à une distance prédéterminée.

2. Procédé selon la revendication 1, comprenant en outre l'affichage du nom de l'élément de noeud (12) lorsque l'élément d'étiquette (132) est près de l'élément de noeud (12), dans lequel la ligne d'élément (122) comprend en outre l'élément de noeud (12).

3. Procédé selon la revendication 1, comprenant en outre l'agrandissement de la taille de l'élément d'étiquette (132) lorsque l'élément d'étiquette (132) est sélectionné et déplacé initialement.

4. Procédé selon la revendication 1, comprenant en outre le défilement de l'écran (134) lorsque l'élément d'étiquette (132) est déplacé jusqu'à une position de déclenchement (212a, 212b), pour afficher une autre portion de la ligne d'élément (122) sur l'écran (134).

5. Produit-programme d'ordinateur, configuré pour être chargé par un ordinateur pour permettre à l'ordinateur de réaliser un procédé (100, 200) d'affichage de données d'arborescence, dans lequel les données d'arborescence comprennent un élément de noeud (12) et un sous-élément (14) appartenant à l'élément de noeud (12), le procédé (100, 200) comprend:
l'affichage d'au moins une portion d'une ligne d'élément (122), incluant le sous-élément (14), et un élément d'étiquette (132) sur un écran (134);
le déplacement de l'élément d'étiquette (132) selon un signal de commande d'utilisateur;
**caractérisé par**
l'affichage du nom de l'élément de noeud (12) sur l'élément d'étiquette (132), lorsqu'une distance entre l'élément d'étiquette (132) et le sous-élément (14) est inférieure à une distance prédéterminée.

6. Produit-programme d'ordinateur selon la revendication 5, dans lequel le procédé comprend en outre l'affichage du nom de l'élément de noeud (12) lorsque l'élément d'étiquette (132) est près de l'élément de noeud (12), dans lequel la ligne d'élément (122) comprend en outre l'élément de noeud (12).

7. Produit-programme d'ordinateur selon la revendication 5, dans lequel le procédé comprend en outre l'agrandissement de la taille de l'élément d'étiquette (132) lorsque l'élément d'étiquette (132) est sélectionné et déplacé initialement.

8. Produit-programme d'ordinateur selon la revendication 5, dans lequel le procédé comprend en outre le défilement de l'écran (134) lorsque l'élément d'étiquette (132) est déplacé jusqu'à une position de déclenchement (212a, 2112b), pour afficher une autre portion de la ligne d'élément (122) sur l'écran (134).

9. Dispositif électronique portatif (300, 400), comprenant:
un module de fourniture de menu (320), utilisé pour fournir des données d'arborescence, dans lequel les données d'arborescence comprennent un élément de noeud (12) et un sous-élément (14) appartenant à l'élément de noeud (12);
un module de fourniture d'étiquette (330) utilisé pour fournir un élément d'étiquette (132) et déplacer l'élément d'étiquette (132);
un module d'entrée (350), utilisé pour entrer un signal de commande par un utilisateur pour commander le module de fourniture d'étiquette (330), dans lequel le module de fourniture d'étiquette (330) déplace l'élément d'étiquette (132) selon le signal de commande d'utilisateur; et
un module d'affichage (340), utilisé pour afficher au moins une portion d'une ligne d'élément (122) comprenant l'élément de noeud (12) et le sous-élément (14) sur un écran (134);
**caractérisé en ce que**
l'élément d'étiquette (132) affiche le nom de l'élément de noeud (12) lorsque l'utilisateur déplace l'élément d'étiquette (132) jusqu'à une zone, et une distance entre l'élément d'étiquette (132) et la zone est inférieure à une distance prédéterminée.

10. Dispositif électronique portatif selon la revendication 9, dans lequel la ligne d'élément (122) comprend en outre l'élément de noeud (12), et l'écran (132) affiche le nom de l'élément de noeud (12) lorsque l'élément d'étiquette (132) est près de l'élément de noeud (12).

11. Dispositif électronique portatif selon la revendication 9, dans lequel la taille de l'élément d'étiquette (132) est agrandie lorsque l'élément d'étiquette est sélectionné et déplacé initialement.

12. Dispositif électronique portatif selon la revendication 9, dans lequel l'écran (134) défile pour afficher une autre portion de la ligne d'élément (122) sur l'écran (134) lorsque l'élément d'étiquette (132) est déplacé jusqu'à une position de déclenchement (212a, 212b).
